(19) Europäisches Patentamt

European Patent Office

Office européen des brevets

(11) EP 4 745 149 A1

(12) **EUROPEAN PATENT APPLICATION**

(43) Date of publication:
20.05.2026 Bulletin 2026/21

(21) Application number: 24212773.6

(22) Date of filing: 13.11.2024

(51) International Patent Classification (IPC):
C07G 1/00 $^{(2011.01)}$         C08L 97/00 $^{(2006.01)}$
B01D 11/02 $^{(2006.01)}$       D21C 11/00 $^{(2006.01)}$

(52) Cooperative Patent Classification (CPC):
C07G 1/00; B01D 9/0045; B01D 9/0054;
B01D 9/0059; B01D 11/028; B01D 11/0288;
B01D 11/0292; D21C 11/0007; C08L 97/005

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(71) Applicant: Tallinn University of Technology
19086 Tallinn (EE)

(72) Inventors:
• Kulp, Maria
19086 Tallinn (EE)
• Lukk, Tiit
19086 Tallinn (EE)
• Nikonov, Andrei
19086 Tallinn (EE)

(74) Representative: Ström & Gulliksson AB
P.O. Box 4188
203 13 Malmö (SE)

(54) **A PROCESS FOR PURIFYING A SOLID LIGNIN COMPOSITION TO PROVIDE PURIFIED LIGNIN WITH REDUCED ASH CONTENT**

(57) A process for purifying a solid lignin composition to reduce its ash content. The process comprises the steps of:
- extracting lignin from the solid lignin composition by dispersing the solid lignin composition in a deep eutectic solvent to provide a liquid deep eutectic solvent phase comprising dissolved lignin;
- precipitating lignin from the liquid deep eutectic solvent phase; and
- separating the precipitated lignin from the liquid deep eutectic solvent phase to provide purified lignin with reduced ash content and a deep eutectic solvent depleted of lignin.

Fig. 1

**Description**

Field of the invention

The present invention relates to a process for purifying a solid lignin composition to provide purified lignin with reduced ash content.

Background

Lignin is a class of complex heterogeneous organic polymers abundantly present in solid portions of trees and other lignocellulosic biomass. It binds the cellulosic fibers together. Chemically, lignin comprises chains of aromatic and oxygenated constituents forming larger molecules. Lignin has a very limited water solubility, especially at neutral and acidic pH, compared to for example hydrophilic cellulose in lignocellulosic biomass.

Lignin has high energy density and intrinsic aromatic structure. Thus, lignin could be used as raw material for fuels, functional materials, and value-added chemicals.

The major source of lignin today is lignin produced in the kraft (sulfate) pulping process. In the kraft pulping process, an alkaline pulping liquor, consisting of a mixture of sodium hydroxide and sodium sulfide, is used at elevated temperature to liberate the lignin components of wood, freeing the cellulosic fibers in the form of pulp, which is then used to make paper. The alkaline pulping liquor is used to make lignin water-soluble through de-polymerization, the dissociation of organic acid groups and de-protonation of phenolic residues due to the high pH. The kraft pulping process is used to liberate lignin in the form of spent alkaline pulping liquor referred to as black liquor, which is discharged from the kraft digester. Black liquor is an aqueous solution that contains lignin residues, hemicellulose, and spent inorganic chemicals used in the kraft pulping process. The lignin obtained from kraft black liquor is typically referred to as kraft lignin. As of 2013, yearly global production of kraft black liquor amounted to 55 million tons in pulp mills as a by-product of pulp production with the kraft lignin extraction potential of ~40 million tons, as disclosed e.g. by *"Gellerstedt, G., Tomani, P., Axegård, P., and Backlund, B.; Lignin Recovery and Lignin-based Products. Integrated Forest Biorefineries-Challenges and Opportunities, 180-210 (2013)"*.

Currently, kraft lignin is primarily used as solid biofuel or as fuel for the production of chemicals. Substantial amounts of inorganic impurities, such as metal ions including sodium ions, present in kraft lignin precludes its usage in other applications. These inorganic impurities present in kraft lignin, e.g. as counter-cations to the lignin's acidic groups are often quantified gravimetrically as ash.

The process of kraft lignin separation from black liquor is described for example in WO 2006/031175. According to the process, black liquor is acidified to precipitate lignin and the solid lignin phase is then separated from the liquor and cleaned. Specifically, an acid-wash stage is used to reduce lignin's sodium content and to obtain kraft lignin with the reduced ash content. As an example, the median value of the ash content in kraft lignin obtained from black liquor by means of the LignoBoost® process is 1 wt. %, as disclosed e.g. by *"Tomani, P.; The LignoBoost Process; Cellulose Chem. Technol., 44 (1-3), 53-58 (2010)"*. Thus, even a process specifically adopted to purify lignin the resulting ash content is still quite high hampering its use as anything apart from use as fuel.

Kraft lignin can also be obtained by using LignoForce™ process described in US 8771464. Compared to LignoBoost®, LignoForce™ process has an additional kraft black liquor oxidation stage, which allows to produce kraft lignin with the ash content of about 0.95 to 1.18 wt.%, as disclosed e.g. by *"Suota, M. J., da Silva, T. A., Zawadzki, S. F., Sassaki, G. L., Hansel, F. A., Paleologou, M., & Ramos, L. P.; Chemical and structural characterization of hardwood and softwood LignoForce™ lignins. Industrial crops and products, 173, 114138 (2021)"*.

However, there is still a desire to use lignin in other higher value applications than fuel applications. Lignin could be used for example as a raw material for the production of carbon fibers, carbon fiber reinforced polymers, and anode materials. Alternatively, lignin could be processed itself to produce chemicals resulting from lignin catalytic depolymerization. However, the inorganic content (also known as ash content in the art), typically including *inter alia* sodium ions, present in kraft lignin hampers its use in higher value applications. As an example, the catalysts used in oil refineries are inactivated by the inorganic content present in kraft lignin. Thus, further processing is required to reduce the ash content of kraft lignin to enable the usage of lignin as the raw material for these higher value applications.

There is thus a great desire to reduce the ash content in kraft lignin significantly below the current level achieved by industry.

In the prior art, there have been further attempts to reduce the ash content in kraft lignin.

WO 2018/004447 A1 discloses a process in which kraft lignin may be mixed either by stirring or shaking overnight with aqueous solutions of mostly sulfuric acid so that the inorganic content of kraft lignin is reduced. US 4,946,946 discloses a process for the production of kraft lignin with reduced inorganic content, in which sulfuric acid is used to precipitate the lignin from aqueous solution by mixing (agitation). However, vigorous agitation of lignin in sulfuric acid is associated with increased risk of hazards in the production process.

Thus, there is a need for a process that reduces the inorganic content in lignin, such as the content of metal ions, i.e. ash content, in kraft lignin, efficiently. There is further need for an environmentally friendly method with a reduced risk for hazards in the production process. Further, it is an advantage if the process could be integrated with already known kraft lignin separation processes in a simple way.

Summary of the invention

An object of the present invention is to provide a process for reducing the amount of inorganic content in lignin. The amount of inorganic content in lignin may be quantified (measured) gravimetrically as ash content. Thus, herein disclosed is a process for purifying a solid lignin composition to reduce its ash content.

It is also desired to provide a process that reduces the ash content in lignin, typically kraft lignin, efficiently in few steps and preferably in high yield. Furthermore, it would be desired to provide a process in which lignin is not essentially fractionated. It is also desired to provide a process, which is environmentally friendly with a reduced risk for hazards in the production process.

The present process aims to address at least one of these objectives and desires by providing a process for providing lignin with low ash content. The process is based on the usage of a deep eutectic solvent (DES) to dissolve lignin and subsequently precipitating lignin with reduced ash content. In short, lignin, present as a solid phase lignin containing material, is mixed with a DES to dissolve lignin. By firstly dissolving lignin in a DES and subsequently precipitating it, most of the inorganic impurities remain dissolved and can hence be separated from the lignin to provide lignin with reduced ash content.

According to a first aspect of the invention there is thus provided a process for purifying a solid lignin composition to reduce its ash content. The process comprises the steps of:

- extracting lignin from the solid lignin composition by dispersing the solid lignin composition in a deep eutectic solvent (DES) to provide a liquid deep eutectic solvent phase comprising dissolved lignin;
- precipitating lignin from the liquid deep eutectic solvent phase; and
- separating the precipitated lignin from the liquid deep eutectic solvent phase to provide purified lignin with reduced ash content and a deep eutectic solvent depleted of lignin.

Deep eutectic solvents (DES) are a type of solvent formed by mixing two or more components that interact through hydrogen bonding. This results in a significant depression of the melting point, compared to the melting points of the individual components. The resulting mixture, i.e. DES, is a liquid at lower temperatures, often at or near room temperature. The name comes from the fact that a eutectic system (or eutectic mixture) is a type of a homogeneous mixture that has a melting point lower than those of its constituents do. DES typically consist of a hydrogen bond donor and a hydrogen bond acceptor. The properties of DES may include:

Low Volatility: DES have lower vapor pressures than conventional solvents, reducing emissions.
Biodegradability: Many DES components are biodegradable and less toxic than traditional solvents.
Customizability: By varying the components, the properties of DES can be tailored for specific applications.

Whereas DES experimentally has been used in extracting lignin in pulping like processes, its potential in lignin purification has not been recognized. It should be noted that the ash content in lignin extracted from woody biomass has been quite high (about 1 wt% or higher). The present process may be used to reduce the ash content of lignin with up to 97% starting from e.g. conventional kraft lignin, such as LignoBoost® lignin.

In the present process, the DES typically comprises choline, such as choline chloride. In a less preferred embodiment, the DES comprises choline dihydrogencitrate. Further, the DES typically comprises at least one carboxylic acid. The carboxylic acid may be selected from the group consisting of formic acid, acetic acid, propionic acid, malic acid, glycolic acid, lactic acid, oxalic acid, malonic acid, citric acid, succinic acid and a mixture of two or more of these carboxylic acids. Preferably, the carboxylic acid is selected from the group consisting of formic acid, propionic acid, malic acid, lactic acid, succinic acid, and a mixture of two or more of these carboxylic acids. The carboxylic acid may be lactic acid.

According to an embodiment, the DES comprises choline chloride and a carboxylic acid selected from the group consisting of formic acid, propionic acid, malic acid, lactic acid, succinic acid, and a mixture of two or more of these carboxylic acids. The deep eutectic solvent may according to an embodiment comprise choline chloride and lactic acid. The molar ratio of choline:carboxylic acid, such as choline chloride:carboxylic acid, in the deep eutectic solvent may be 1:1 to 1:15, such as 1:1 to 1:10 or 1:1 to 1:5. Whereas an equimolar ratio, or a slight excess of choline is more common for a DES based on choline chloride and a carboxylic acid, a slight excess of carboxylic acid may be used in the present process. Thus, the molar ratio of choline:carboxylic acid in the deep eutectic solvent may be < 1:1.

According to alternative embodiment, the DES comprises a polyhydric alcohol, such as glycerol, as an alternative to a carboxylic acid. Further, it was found to be less preferred to use a DES comprising urea.

In the step of extracting lignin from the solid lignin composition, the weight ratio of lignin:deep eutectic solvent may be in the range 1:1 to 1:20, such as 1:5 to 1:15. Typically, more DES than solid lignin composition is used. In this step, the solid lignin composition is mixed with the DES. Before precipitating lignin, any undissolved matter may be filtered of. Further, any additional liquid phase present separate from the liquid deep eutectic solvent phase may be separated from the DES phase before or after precipitating lignin.

The extraction of lignin is typically performed at elevated temperature to facilitate the extraction. Further, the elevated temperature also assists in separating lignin from its original inorganic content. Thus, the temperature in the step of extracting lignin from the solid lignin composition may be at least 50°C. The temperature may be in the range 60 to 200°C, such as 80 to 160°C, or 110 to 160°C. The extraction is generally performed at atmospheric pressure. The extraction may be performed for 0.25 to 8 hours, such as for 0.5 to 6 hours.

Once the lignin has been dissolved, it is precipitated and subsequently separated from the DES still comprising dissolved inorganic content, whereby purified lignin with reduced ash content is provided. The lignin may be separated in various ways, such as by decantation, filtration or a combination thereof. Further, the separation may include centrifugation.

The lignin may be precipitated in different ways. According to an embodiment, the lignin is precipitated from the liquid deep eutectic solvent phase by adding a first aqueous solution to the liquid, deep eutectic solvent phase. Adding an aqueous solution will lower the solubility of the lignin, whereas dissolved inorganic content remains dissolved, such that lignin may be selectively precipitated. Whereas the first aqueous solution may comprise only water, it may according to an embodiment comprise ethanol as well. By adding ethanol, the association between DES and lignin during the precipitation may be reduced, such that less DES is co-precipitated with the lignin. The first aqueous solution does comprise more water than ethanol, if ethanol is present. The ratio water/ethanol mixture in the first aqueous solution may be in the range 4:1 to 20:1, such as 5:1 to 15:1. According to an embodiment, the ratio water/ethanol mixture in the first aqueous solution is 9:1. The first aqueous solution may comprise least 80 wt.% water. Further, the first aqueous solution may be acidic to ensure that lignin is precipitated in protonated form. Using a first aqueous solution being acidic may thus be advantageous.

Furthermore, before lignin is precipitated, it may be beneficial to separate the deep eutectic solvent phase comprising dissolved lignin from any solids and/or any other liquid phase(s) before lignin is precipitated from the liquid deep eutectic solvent phase. It may be that some of the solid lignin composition is not dissolved, or that some component therein not is dissolved. Further, it could be that a separate minor liquid phase is formed. Thus, the process may comprise the step of separating the deep eutectic solvent phase comprising dissolved lignin from any solids and/or any other liquid phase(s) before lignin is precipitated from the liquid deep eutectic solvent phase.

The present process may be integrated in an overall process at a pulp mill, such as kraft pulp mill. Kraft lignin present in black liquor from the pulp mill may be separated by using LignoBoost® or LignoForce™ plants, which will provide the lignin filter cake that can be subsequently purified by the present process. By-product(s) from the purification of lignin may be re-circulated in the overall process at the pulp mill to ensure an efficient process.

While not being limited thereto, the source of the solid lignin composition is typically black liquor from a kraft pulping process. According to an embodiment, the lignin in the solid lignin composition is thus kraft lignin.

According to an alternative embodiment, the lignin in the solid lignin composition may be alkali lignin, enzymatic/acid hydrolysis lignin, organosolv lignin, or steam explosion lignin. Various routes to obtain lignin are described *inter alia* in "Mastrolitti, S., Borsella, E., Giuliano, A., Petrone, M. T., De Bari, I., Gosselink, R.J.A., Van Erven, G., Annevelink, E., Traintafyllidis, K.S. and Stichnothe, H.; Sustainable lignin valorization: Technical lignin, processes and market development. IEA Bioenergy Task 42 & LignoCOST. ISBN: 979-12-80907-01-1 (2021*)"*. As an example, the lignin in the solid lignin composition may be obtained by a thermomechanical enzymatic hydrolysis technique denoted Sunburst™ developed by Sweetwater Energy, Inc. Sunburst is a pre-processing technology that fractionates biomass into biocomponents, i.e. lignin and sugars.

The solid lignin composition may comprise at least 45 wt.% lignin. Typically, the content of lignin in a solid lignin composition from LignoBoost® and LignoForce™, respectively, plants as a pressed filter cake is in the range of 60 to 70 wt.% and 45 to 68 wt.%, respectively. Further, the solid lignin composition may comprise less than 2 wt.% of ash; typically median values of around 1% are achieved in these processes. At least 1000 mg/kg of sodium is typically present in the dry solid lignin, however, the sodium concentration can be as high as 6000 mg/kg. At least 200 mg/kg of potassium per dry solid lignin is typically present (range: 208 - 543 mg/kg).

As known in the art, lignin is more soluble in water at higher pH, i.e. alkaline pH. Typically, a pH of about at least 9 to 10 is required to dissolve lignin. Lignin is essentially insoluble in water at neutral and acidic pH. Thus, lignin may be precipitated from an aqueous alkaline solution by lowering the pH to provide a solid lignin composition.

According to an embodiment, the solid lignin composition to be purified comprises acidic lignin. The solid lignin composition may be have obtained from black liquor by acidic precipitation.

According to an embodiment, the solid lignin composition to be purified has been obtained by precipitating lignin from black liquor by acidifying the black liquor. The black liquor may be acidified by applying carbon dioxide. The carbon dioxide will dissolve in the alkaline black liquor and whereby decreasing the pH to eventually precipitate lignin. Alternatively, an acid, such as sulfuric acid, may be used to acidifying the black liquor. Furthermore, once precipitated, the lignin may subsequently have been washed with an acidic aqueous solution, such an aqueous solution comprising sulfuric acid. According to a preferred aspect of this embodiment, the precipitated lignin may have been separated from the black liquor by filtration to provide a filter cake comprising lignin, subsequently the filter cake may has been washed with an acidic aqueous solution, such an aqueous solution comprising as sulfuric acid.

According to an embodiment, the solid lignin composition to be purified has been obtained from a process comprising the steps of:

precipitating lignin by acidifying, such as by adding carbon dioxide, black liquor obtained from an alkaline chemical pulping process, such as the kraft process;
dewatering and/or filtrating the obtained lignin to provide a first filter cake;
re-suspending the lignin in an aqueous solution;
adjusting the pH of the resulting suspension provide an acidic suspension having a pH of 6 or less;
dewatering and/or filtrating the acidic suspension to provide a second filter cake; and
washing and dewatering the second filter cake, whereby a solid lignin composition to be further purified by the present method is obtained.

Whereas the present extraction and precipitation is efficient in lowering the ash content, it may still be desired to further purify the lignin. Thus, the process may further comprise the step of washing the purified lignin separated from the liquid, deep eutectic solvent phase. The purified lignin separated from the liquid deep eutectic solvent phase may be washed with a second aqueous solution. Washing the purified lignin separated from the liquid deep eutectic solvent phase may further reduce the ash content. Especially, washing the purified lignin separated from the liquid deep eutectic solvent phase may be beneficial to remove any DES still present in the separated lignin. Given that DES typically has low vapor pressure and high boiling point, it may be preferred to remove DES in washing step with a second aqueous solution.

Whereas the second aqueous solution may comprise only water, it may according to an embodiment comprise ethanol as well. By adding ethanol, any association between remaining DES and lignin may be reduced, such that DES more efficiently is dissolved in the second aqueous solution. The second aqueous solution does comprise more water than ethanol, if ethanol is present. The ratio water/ethanol mixture in the second aqueous solution may be in the range 4:1 to 20:1, such as 5:1 to 15:1. According to an embodiment, the ratio water/ethanol mixture in the second aqueous solution is 9:1. The second aqueous solution may comprise at least 80 wt.% water.

In washing the purified lignin, after having been separated from the liquid deep eutectic solvent phase, it may be dispersed in a second aqueous solution. Subsequently, washed, purified lignin may be separated from the dispersion. In the second washing step, the pH of the resulting dispersion may be decreased such that the pH of the resulting suspension is 6 or less. Further, if the purified lignin is separated from the liquid deep eutectic solvent phase by filtration, the resulting filter cake may be washed by the second aqueous solution, such as purging the second aqueous solution through the filter cake.

Further, the process may optionally comprise one or further additional corresponding washing steps, such as repeated dispersion of the lignin in an aqueous solution. Whereas washing will increase the purity of the lignin, it may also reduce the overall yield.

Furthermore, as it is preferred to re-use the DES in extracting lignin from solid lignin comprising, the DES depleted of lignin is preferably purified. Thus, the process may comprise a step of purifying the DES depleted of lignin. Furthermore, the process may comprise a step of re-using the DES depleted of lignin in extracting lignin from a solid lignin composition. If to be re-used, the DES is preferably firstly purified.

One typical contaminant in the spent DES in the present process is water and optionally ethanol, as they may be used in precipitating and washing the lignin. Thus, the deep eutectic solvent depleted of lignin may be purified by evaporating volatile contaminants, such as water. Evaporation may be achieved by vacuum evaporation, e.g. at 65°C. Further, the DES may be dried at temperature slightly above 100°C, such as about 105°C.

The present process provides for purifying a solid lignin composition to reduce its ash content. Thus, resulting lignin may be used in application requiring a low ash content. Especially, the present process may be used to reduce of the ash content (wt.%), compared to the solid lignin composition, by up to 99%, or even more, such as by at least 80%, such as at least 90%, 95%, 97.5%, 99.0%, or 99.5%. According to an embodiment, the ash content in the purified lignin is less than 0.1 wt.%. The ash content of the lignin may, according to an embodiment, be determined in accordance with the international standard ISO 9795:2023 (en) "Lignins - Determination of inorganics content in kraft lignin, soda lignin and hydrolysis lignin". According to another embodiment, the ash content of the lignin may be determined as specified by the international standard ISO 18122:2022 (en) "Solid biofuels - Determination of ash content". The sodium and potassium content of the lignin may be determined either according to ISO 9795:2023, or according to ISO 16995:2015 (en) "Solid biofuels - Determination of the water soluble chloride, sodium and potassium", ISO 9964-1:1993 (en) "Water quality - Determination of sodium and potassium - Part 1: Determination of sodium by atomic absorption spectrometry", and ISO 9964-2:1993 (en) "Water quality - Determination of sodium and potassium - Part 2: Determination of potassium by atomic absorption spectrometry".

Without further elaboration, it is believed that one skilled in the art may, using the preceding description, utilize the present invention to its fullest extent. The preceding preferred specific embodiments, as well as the succeeding examples, are, therefore, to be construed as merely illustrative and not limitative of the disclosure in any way whatsoever.

Although the present invention has been described above with reference to specific embodiments, it is not intended to be limited to the specific form set forth herein. Rather, the invention is limited only by the accompanying claims and other embodiments than the specific embodiments described above are equally possible within the scope of these appended claims.

In the claims, the term "comprises/comprising" does not exclude the presence of other elements or steps. Additionally, although individual features may be included in different claims, these may possibly advantageously be combined, and the inclusion in different claims does not imply that a combination of features is not feasible and/or advantageous.

In addition, singular references do not exclude a plurality. The terms "a", "an", "first", "second" etc. do not preclude a plurality.

Drawings

    **Fig. 1** shows a process scheme of an embodiment.
    **Fig. 2** shows a process scheme of an embodiment including a further purification step

Detailed description

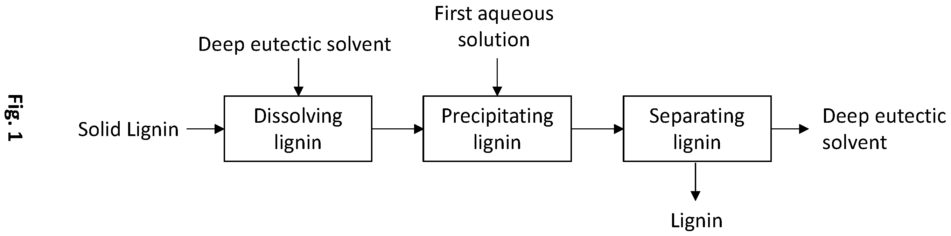

In the process scheme in **Fig. 1,** a process for purifying a solid lignin composition to reduce its ash content, according to an embodiment, is shown.

The process outlined in Fig. 1 comprises the steps of:

- extracting lignin from the solid lignin composition by dispersing the solid lignin composition in a deep eutectic solvent to provide a liquid deep eutectic solvent phase comprising dissolved lignin;
- precipitating lignin from the liquid deep eutectic solvent phase; and
- separating the precipitated lignin from the liquid deep eutectic solvent phase to provide purified lignin with reduced ash content and a deep eutectic solvent depleted of lignin.

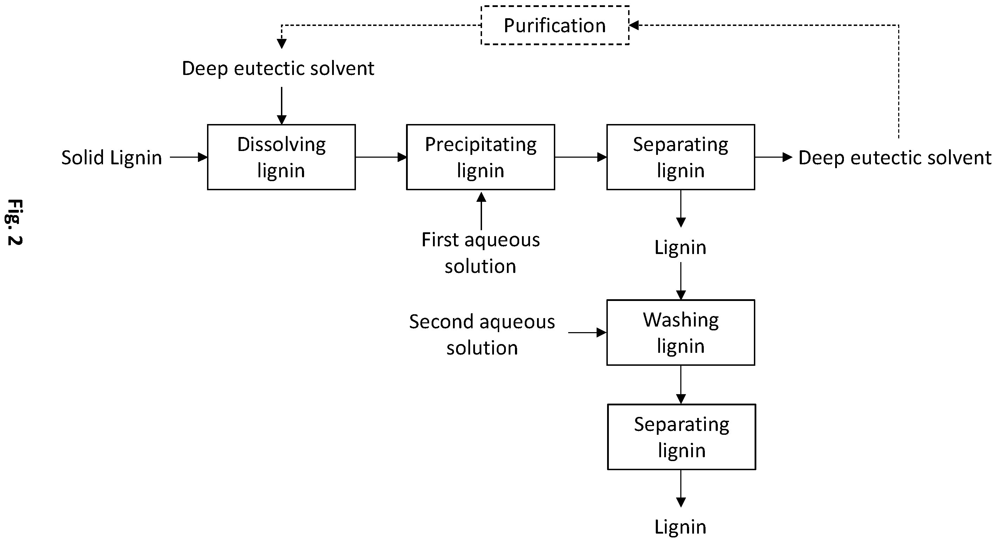

In the process scheme in **Fig. 2,** a process for purifying a solid lignin composition to reduce its ash content, according to an embodiment, is shown. The first steps in the process are the same as in Fig. 1, i.e.

- extracting lignin from the solid lignin composition by dispersing the solid lignin composition in a deep eutectic solvent to provide a liquid deep eutectic solvent phase comprising dissolved lignin;
- precipitating lignin from the liquid deep eutectic solvent phase; and
- separating the precipitated lignin from the liquid deep eutectic solvent phase to provide purified lignin with reduced ash content and a deep eutectic solvent depleted of lignin. The process outlined in Fig. 2 further comprises the step of washing the purified lignin separated from the liquid, deep eutectic solvent phase. The separated, purified lignin, is washed with a second aqueous solution. Furthermore, an optional step of purifying the deep eutectic solvent depleted of lignin may be included the process. The purified deep eutectic solvent may be re-used in extracting lignin from the solid lignin composition.

Examples

The following examples are mere examples and should by no means be interpreted to limit the scope of the invention, as the invention is limited only by the accompanying claims.

Unless otherwise stated the examples below were carried out at atmospheric pressure and room temperature.

*Ash content*

The ash content of dried lignin sample was measured as follows. An empty quartz glass dish was heated in the furnace to the temperature of 550 ± 10 °C for 60 minutes to remove any biogenic material and moisture. The empty dish was then transferred to a desiccator with desiccant for 30 minutes to cool the dish to room temperature. The cooled dish was weighed to the nearest 0.01 mg and its mass was recorded as mi. The dried lignin (1 g) was placed at the bottom of the dish and spread in an even layer over the bottom surface. The dried lignin and the quartz glass dish were weighed, and their mass recorded as $m_2$. The quartz glass dish with the dried lignin on it were placed into the cold furnace and heated by raising the furnace temperature evenly to 250 °C over a period of 20 minutes and maintaining the temperature at this level for 60 minutes. The furnace temperature was raised evenly further to 550 ± 10 °C over a period of 30 minutes and maintained at this level for 180 minutes. Finally, the quartz glass dish and its content, i.e. the ash (the residue), were removed from the furnace and cooled to room temperature by transferring it to a desiccator with desiccant for 30 minutes. The quartz glass dish and the ash were weighed to the nearest 0.01 mg and their mass recorded as ms. Three replicates of this experiment were performed. The lignin ash content on dry basis ($A_d$) was calculated using Equation I:

$$A_d = \frac{m_3 - m_1}{m_2 - m_1} \times 100\% \qquad \text{Equation I}$$

*Sodium and potassium content determination*

Dried lignin (1 g) was weighed to the nearest 0.1 mg001 g in a clean vessel, made of polypropylene with a volume of about 50 ml and provided with a tight screw cap. To mineralize the dried lignin, seven milliliters (7 ml) of nitric acid ($HNO_3$, 65%, "Suprapur", Merck) were added to it and the vessel was closed and incubated in a water bath at 85 ± 5°C for 7 hours. The mineralization process was continued at 85 ± 5°C in the closed vessel for another 6 hours after the addition of 1 ml hydrogen peroxide ($H_2O_2$, ≥30%, TraceSELECT®, Fluka). The closed vessel was removed from the water bath and cooled to room temperature. The contents of the vessel were then transferred to a 50 ml volumetric flask. The inside of the vessel was washed with small portions of deionized ultrapure water, the washings transferred to the volumetric flask, and the volume of resulting solution was made up to the 50 ml with deionized ultrapure water. Sodium and potassium content in the resulting solution (sample) was then determined using flame atomic absorption spectrometer in emission mode (AES) spectrometry by aspirating the sample directly into the air/acetylene (99.5%, AGA) flame of an atomic absorption spectrometer.

The calibration solutions containing sodium or potassium were prepared by diluting the corresponding standard solutions to the concentrations: 0 mg/L; 0.1 mg/L; 0.2 mg/L; 0.4 mg/L; 0.6 mg/L and 1.0 mg/L (0.5% $HNO_3$). The spectrometer was set up according to the manufacturer's recommendation by aspirating calibration solution. The aspiration and flame conditions were optimized (i.e., aspiration rate, nature of the flame, position of the optical beam in the flame). The zero-emission response of the spectrometer was adjusted with deionized ultrapure water. Subsequently, the calibration solutions were aspirated with an aspiration of deionized ultrapure water between each. The emission was measured at 589 nanometers (nm) for sodium or at 766 nm for potassium calibration solutions. The calibration graphs were prepared by plotting the reading against the concentration of the element in mg/L. The samples were aspirated with an aspiration of deionized ultrapure water between each and emissions determined. The blank determination was carried out with each batch of samples by applying the same procedure and using the blank solution instead of the sample. The concentration of the element in the solution was determined using the calibration graph.

The content of the element in the dried lignin as analyzed, $w_x$ ($x$ is Na or K), expressed in mg/kg is given by the Equation II:

$$w_x = \frac{(c_x - c_0) \times V}{m} \qquad \text{Equation II}$$

where: $c_x$ (i.e., $c_{Na}$ or $c_K$) is the concentration of the element, in mg/L, in the sample solution; $c_0$ is the concentration of the element, in mg/L, in the blank solution; $V$ is the volume, in mL, of the sample solution; and $m$ is the mass, in g, of the dried lignin used.

The concentrations of the elements in the mineralized and diluted sample, $c_x$ ($x$ is Na or K), expressed in mg/L, are determined using the Equation III:

$$c_x = \frac{(A - A_0)}{b} \text{Equation III}$$

where: $A$ is the absorbance of the sample; $A_0$ is the absorbance of the blank solution; b is the slope of the linear calibration curve, in L/mg.

*Example 1*

Solid choline chloride (ChCl) and various hydrogen bond donors (HBDs) were mixed in molar ratios as specified in Table 1 under stirring at +80 °C (HBDs: acetic acid, lactic acid, glycerol) or at +110 °C (HBDs: malic acid, urea) for 2h to obtain homogeneous and transparent ChCl:HBD liquid deep eutectic solvent (DES), which was subsequently cooled to room temperature. The solid lignin used was UPM BioPiva™ 100. This is a softwood kraft lignin with a solid content of about 65% and an average molecular weight of about 4,600 g/mol.

To produce lignin with reduced ash content, dried (moisture content <5%) UPM BioPiva™ 100 kraft lignin (10 g) present as powder was added to liquid ChCl:HBD DES (100 g). The resulting reaction mixture was stirred to dissolve lignin for about 4 hours at a temperature of 130°C. The reaction mixture containing dissolved lignin in ChCl:HBD DES was cooled to room temperature. Subsequently, 500 ml of deionized ultrapure water was added to the reaction mixture containing dissolved lignin in ChCl:LA DES under stirring for 20 min to precipitate lignin. The suspension was transferred to 1L centrifuge bottle and centrifuged at 4,000 g for 10 minutes. The water/ChCl:HBD liquid phase (the supernatant) was removed from the precipitate by decanting. The precipitated, purified lignin (solid fraction) was washed repeatedly by adding 600 ml of deionized ultrapure water to the precipitated, purified lignin, dispersing, centrifuging, and decanting to obtain a solid lignin fraction until the supernatant got neutral (checking by pH paper).

The obtained solid lignin fraction was dried in oven at +30 °C for 72 hours to remove any remaining solvent from the sample to provide washed, purified dried lignin with low ash content.

A reference sample was provided by drying 10 g UPM BioPiva™ 100 kraft lignin in oven at +30 °C for 72 hours to remove any remaining solvent from the sample.

The purified dried lignin and the reference sample, respectively, were then analyzed with regard to the ash content (cf. Table 1) by means of calculating the mass of the residue remaining after heating the sample in air under rigidly controlled conditions of initial sample weight, heating rate, time, and final temperature. The procedure for measuring the ash content of dried lignin sample is specified above. The procedure for measuring the sodium and potassium contents of dried lignin sample is specified above.

**Table 1**

| Reference / Exp. no | DES comprising ChCl:HBD | ChCl:HBD molar ratio | DES:SKL mass ratio (w/w) | Yield (wt. %) | Ash content (wt. %) | Ash reduction (%) | Na, mg/kg | K, mg/kg |
|---|---|---|---|---|---|---|---|---|
| Reference | na | na | na | na | 1.14 | na | 1,934 | 208 |
| 1 | ChCl:LA | 1:1 | 10 | 88.8 | 0.062 | 94.6 | <7[b] | <7 |
| 2 | ChCl:LA | 1:5 | 10 | 97.7 | 0.056 | 95.1 | <7 | <7 |
| 3 | ChCl:LA | 1:10 | 10 | 98.8 | 0.056 | 95.1 | <7 | <7 |
| 4 | ChCl:LA | 1:15 | 10 | 108.5 | 0.031 | 97.3 | <7 | <7 |
| 5 | ChCl:MA | 1:1 | 10 | 87.7 | 0.095 | 91.7 | 27 | <7 |
| 6 | ChCl:MA | 1:5 | 10 | 89.4 | 0.061 | 94.6 | <7 | <7 |
| 7 | ChCl:MA | 1:10 | 10 | 96.5 | 0.068 | 94.0 | <7 | <7 |
| 8 | ChCl:MA | 1:15 | 10 | 88.4 | 0.066 | 94.2 | <7 | <7 |
| 9 | ChCl:AA | 1:1 | 10 | 86.3 | 0.087 | 92.4 | <7 | <7 |
| 10 | ChCl:AA | 1:5 | 10 | 66.7 | 0.110 | 90.4 | <7 | <7 |
| 11 | ChCl:AA | 1:10 | 10 | 59.1 | 0.160 | 86.0 | <7 | <7 |
| 12 | ChCl:AA | 1:15 | 10 | 81.7 | 0.130 | 88.6 | <7 | <7 |
| 13 | ChCl:U | 1:1 | 10 | 53.5 | 0.30 | 73.7 | 15.4 | <7 |
| 14 | ChCl:U | 1:5 | 10 | 47.4 | 0.33 | 71.1 | 39.1 | <7 |
| 15 | ChCl:U | 1:10 | 10 | 71.5 | 0.24 | 78.9 | 23.7 | <7 |
| 16 | ChCl:U | 1:15 | 10 | 58.5 | 0.37 | 67.5 | 45.3 | <7 |

(continued)

| Reference / Exp. no | DES comprising ChCl:HBD | ChCl:HBD molar ratio | DES:SKL mass ratio (w/w) | Yield (wt. %) | Ash content (wt. %) | Ash reduction (%) | Na, mg/kg | K, mg/kg |
|---|---|---|---|---|---|---|---|---|
| Reference | na | na | na | na | 1.14 | na | 1,934 | 208 |
| 17 | ChCl:Gly | 1:1 | 10 | 58.7 | 0.156 | 86.3 | <7 | <7 |
| 18 | ChCl:Gly | 1:5 | 10 | 77.7 | 0.125 | 89.0 | 13.0 | <7 |
| 19 | ChCl:Gly | 1:10 | 10 | 133 | 0.100 | 91.2 | 66.8 | <7 |
| 20 | ChCl:Gly | 1:15 | 10 | 136 | 0.097 | 91.5 | 61.0 | <7 |

***Notes***: *Reference= UPM BioPiva™ 100 kraft lignin; SKL = solid Kraft lignin; na= not applicable; ChCl= choline chloride; HBD=hydrogen bond donor selected from the group consisting of LA=lactic acid, MA=malic acid, AA =Acetic acid, U=Urea, Gly=glycerol.*
*All reported figures are the mean of two parallel experiments* **(NB 7** *mg/kg of Na and K, respectively, represents the detection limit).*

As can be seen in **Table 1,** DES comprising a carboxylic acid (especially lactic acid and malic acid) were effective in reducing the ash content. Further, the most efficient DES is seemingly ChCl:lactic acid, representing a preferred solvent. Glycerol represents a less preferred solvent and urea and even less preferred solvent, still they may be used to reduce the ash content. The reported lignin yield (>100%) with ChCl:Glycerol 1:10 and 1:15 is seemingly incorrect. In these experiments, the lignin formed a big gum-like clot in the DES, which turned solid when cooled down.

*Example 2*

Based on previous screening study, an optimal DES mixture containing choline chloride (ChCl) and lactic acid (LA) with the ratio 1:10 was used in the next optimization study by applying statistical experimental design (DOE).

A response surface methodology (RSM) and Box-Behnken experimental design were used for the optimization of the Kraft lignin purification process working parameters: extraction time (h), extraction temperature (°C), DES:SKL (DES - deep eutectic solvent, SKL - solid Kraft lignin) mass ratio (w/w). The impact of these three experimental parameters to the mineral (ash, Na, K) content and yield of the lignin was investigated. Extraction time was varied from 2 to 4 hours, extraction temperature from 80 to 130°C and DES:SKL mass ratio was varied from 3:1 to 10:1.

Box-Behnken experimental design with three factors at three levels was used to optimize DeAsh process conditions and achieve the best yield and purity of obtained lignin. A Box-Behnken design requires 2k(k - 1) + 3 experiments (with 3 central points) and the factors are examined at three levels (-1, 0, +1) , where k is the number of factors. **Table 2** shows the levels of the significant factors tested in Box-Behnken design, whereas **Table 3** shows experimental design and results.

**Table 2.** Coded and actual values of independent factors.

| Variables | Symbols | Coding | | |
|---|---|---|---|---|
| | | - | **0** | + |
| Extraction time, h | A | 2 | 3 | 4 |
| Extraction temperature, °C | B | 80 | 105 | 130 |
| DES:SKL mass ratio (w/w) | C | 3 | 6.5 | 10 |

**Table 3.** Parameters, their intervals in the runs conducted in Box-Behnken design and corresponding results (JMP® Software). The high and low levels of the factors coded as (+) and (-) , nominal level as (0).

| Reference / Exp no. | Extraction time, h | Extraction temp. (°C) | DES:SKL mass ratio (w/w) | Yield (wt. %) | Na, mg/kg | K, mg/kg | Ash content (wt. %) | Ash reduction (%) |
|---|---|---|---|---|---|---|---|---|
| Reference | na | na | na | na | 1,934 | 208 | 1.14 | na |
| 1 | 4 | 105 | 3 | 98.44 | <7 | <7 | 0.0593 | 94.8 |

(continued)

| Reference / Exp no. | Extraction time, h | Extraction temp. (°C) | DES:SKL mass ratio (w/w) | Yield (wt. %) | Na, mg/kg | K, mg/kg | Ash content (wt. %) | Ash reduction (%) |
|---|---|---|---|---|---|---|---|---|
| 2 | 2 | 105 | 3 | 96.66 | <7 | <7 | 0.1082 | 90.5 |
| 3 | 4 | 105 | 10 | 92.56 | <7 | <7 | 0.0834 | 92.7 |
| 4 | 2 | 80 | 6.5 | 86.07 | <7 | <7 | 0.0998 | 91.2 |
| 5 | 3 | 80 | 10 | 85.2 | <7 | <7 | 0.1092 | 90.4 |
| 6 | 3 | 80 | 3 | 93,38 | 9,4 | <7 | 0.1034 | 90.9 |
| 7 | 3 | 105 | 6.5 | 93.02 | <7 | <7 | 0.0880 | 92.3 |
| 8 | 4 | 130 | 6.5 | 108.94 | <7 | <7 | 0.0397 | 96.5 |
| 9 | 2 | 130 | 6.5 | 97.71 | <7 | <7 | 0.0647 | 94.3 |
| 10 | 3 | 130 | 3 | 103.61 | 13,5 | <7 | 0.0585 | 94.9 |
| 11 | 3 | 105 | 6.5 | 93.44 | <7 | <7 | 0.0729 | 93.6 |
| 12 | 3 | 105 | 6.5 | 95.95 | <7 | <7 | 0.0838 | 92.6 |
| 13 | 2 | 105 | 10 | 93.35 | <7 | <7 | 0.0499 | 95.6 |
| 14 | 4 | 80 | 6.5 | 76.48 | < 7 | <7 | 0.0912 | 92.0 |
| 15 | 3 | 130 | 10 | 104.38 | <7 | <7 | 0.0012 | 99.9 |

**Notes**: *Reference= UPM BioPiva™ 100 kraft lignin; na= not applicable; DES = ChCl:LA with the molar ratio 1:10, where ChCl= choline chloride and LA = lactic acid; SKL = solid Kraft lignin.*

Data were processed using the JMP® 10 software and an analysis of variance (ANOVA) test was calculated to obtain the interaction between the process variables and the response. The quality of fit of the polynomial model was expressed by the coefficient of determination $R^2$, and its statistical significance was checked by the F-test.

*Results*

Ash content in DES purified lignin: The first four columns in **Table 3** show run number and experimental conditions of the runs. Optimal parameters for lignin purification were evaluated by analyzing obtained response - ash content (wt. %). It was desirable to achieve the lowest ash content in obtained DES lignin. By applying multiple regression analysis onto the experimental data, the following second-order polynomial equation (model) was established to explain the ash content in terms of the explanatory variables:

$$Y = 0,08 - 0,006A - 0,03B - 0,01C - 0,003AB + 0,02AC - 0.02BC - 0.0A^2 - 0,008B^2 - 0,005C^2$$

In this equation; *A, B* and *C* are extraction time, extraction temperature and DES:SKL mass ratio respectively. The analysis of variance (ANOVA) test was conducted with experimentally observed data to test the significance of the model. Obtained P-value of 0.01 implies that the model is statistically si-gnificant. The fit of the model was checked by the coefficient of determination $R^2$, which was calculated to be 0.95 indicating that 95% of the variability in the response is explained by the model.

This indicates a good agreement between experimental and predicted values and implies that the mathematical model is reliable for ash content. According to the results of the statistical design the optimum values of tested factors were evaluated as follows: extraction time 2h, extraction temperature 105 °C and DES:SKL mass ratio 10:1. Under these optimized conditions, lignin with ash content 0.05% could be obtained.

The results of the statistical modelling demonstrated that extraction time did not significantly influence the content of ash, which means that in 2 hours obtained result will not significantly differ from that obtained in 4 hours. However, two other parameters have significant impact onto the purity of the lignin - to obtain ash of 0.05% the extraction temperature of at least 105°C with DES:SKL ratio 10: 1 should be used. Increase in temperature up to 130°C will provide decrease in ash content up to 0.001 % (at 2 hrs extraction and DES:SKL ratio 10:1).

Yield of lignin and metals: The second response of the DOE was the yield of obtained lignin (Table 3). By applying multiple regression analysis onto the experimental data, the following second-order polynomial equation (model) was established to explain the yield of purified DES lignin in terms of the explanatory variables:

$$Y = 94{,}1 + 1{,}6A + 11{,}1B - 1{,}5C + 7{,}7AB - 0{,}64AC + 3{,}5BC - 0{,}99A^2 + 1{,}7B^2 + 2{,}1C^2$$

In this equation; $A$, $B$ and $C$ are extraction time, extraction temperature and DES:SKL mass ratio respectively. The analysis of variance (ANOVA) test was conducted to test the significance of the model. Obtained P-value of 0.01 implies that the model is statistically significant with the coefficient of determination $R^2$ 0.95. This indicates a satisfying agreement between experimental and predicted values and implies that the mathematical model is reliable for yield values. According to the results of the statistical design DES lignin yield close to 96% could be obtained at lower values of all three parameters: time 2h, temperature 80 C and DES:SKL ratio 3: 1, however these conditions do not provide the desirable value of ash ($\leq$ 0.05%). Under optimal conditions for ash (extraction temperature of at least 105°C with DES:SKL ratio 10: 1, extraction time 2 h) lignin yield will be around 94%.

Na and K contents in DES purified lignin were mostly below the quantification limits for all tests in designed experiment (Table 3); therefore statistical analysis of the metals results was not carried out.

*Conclusions*

Response surface methodology (RSM) applying Box-Behnken design was used for the optimization of the conditions for purification (demineralization) of lignin with DES. Two RSM models for ash content and yield were created and analyzed. Optimized conditions provided by the RSM models used extraction temperature of at least 105°C, extraction time 2 h and DES:SKL ratio 10:1. Under these conditions, purified lignin could be obtained with ash content around 0.05% and yield 94%. Ash content decrease to 0.001% requires extraction temperatures close to 130°C.

**Claims**

1. A process for purifying a solid lignin composition to reduce its ash content, wherein the process comprises the steps of:

    - extracting lignin from the solid lignin composition by dispersing the solid lignin composition in a deep eutectic solvent to provide a liquid deep eutectic solvent phase comprising dissolved lignin;
    - precipitating lignin from the liquid deep eutectic solvent phase; and
    - separating the precipitated lignin from the liquid deep eutectic solvent phase to provide purified lignin with reduced ash content and a deep eutectic solvent depleted of lignin.

2. The process according to claim 1, wherein lignin is precipitated from the liquid deep eutectic solvent phase by adding a first aqueous solution to the liquid, deep eutectic solvent phase; optionally the first aqueous solution comprises ethanol.

3. The process according to claim 1 or 2, wherein the deep eutectic solvent phase comprising dissolved lignin is separated from any solids and/or any other liquid phase(s) before lignin is precipitated.

4. The process according to any one of claims 1 to 3, wherein the solid lignin composition to be purified comprises acidic lignin; preferably the solid lignin composition has been obtained from black liquor by acidic precipitation.

5. The process according to claim 4, wherein the solid lignin composition to be purified has been obtained by precipitating lignin from black liquor by acidifying the black liquor, such as by applying carbon dioxide; preferably the precipitated lignin has subsequently been washed with an acidic aqueous solution, such an aqueous solution comprising as sulfuric acid; more preferably the precipitated lignin has been separated from the black liquor by filtration to provide a filter cake comprising lignin, subsequently the filter cake has been washed with an acidic aqueous solution, such as an aqueous solution comprising sulfuric acid.

6. The process according to any one of claims 1 to 5, wherein the process further comprises the step of washing the purified lignin separated from the liquid, deep eutectic solvent phase; preferably the purified lignin separated from the liquid deep eutectic solvent phase is washed with a second aqueous solution; optionally the second aqueous solution comprises ethanol.

7.  The process according to claim 6, wherein the step of washing the purified lignin comprises the step of dispersing the purified lignin in a second aqueous solution and subsequently separating washed, purified lignin therefrom; optionally the process further comprises one or further additional corresponding washing steps.

8.  The process according to any one of claims 1 to 7 wherein the weight ratio of lignin:deep eutectic solvent in the step of extracting lignin from the solid lignin composition is in the range 1:1 to 1:20, such as 1:5 to 1:15.

9.  The process according to any one of claims 1 to 7, wherein the deep eutectic solvent comprises choline, such as choline chloride, and at least one carboxylic acid,; preferably the carboxylic acid is selected from the group consisting of formic acid, acetic acid, propionic acid, malic acid, glycolic acid, lactic acid, oxalic acid, malonic acid, citric acid, succinic acid and a mixture of two or more of these carboxylic acids; more preferably the carboxylic acid is selected from the group consisting of formic acid, propionic acid, malic acid, lactic acid, succinic acid, and a mixture of two or more of these carboxylic acids.

10. The process according to claim 9, wherein the deep eutectic solvent comprises choline chloride and lactic acid.

11. The process according to claim 9 or 10, wherein the molar ratio of choline: carboxylic acid in the deep eutectic solvent is 1:1 to 1:15, such as 1:1 to 1:10 or 1:1 to 1:5.

12. The process according to any one of claims 1 to 11, wherein the temperature in the step of extracting lignin from the solid lignin composition is at least 50°C, such as 60 to 200°C, or 80 to 160°C; preferably the extraction being performed at atmospheric pressure, and/or the extraction being performed for 0.25 to 8 hours, such as 0.5 to 6 hours.

13. The process according to claim 10, wherein the deep eutectic solvent depleted of lignin is purified; preferably the purified deep eutectic solvent being re-used in extracting lignin from a solid lignin composition.

14. The process according to claim 13, wherein the deep eutectic solvent depleted of lignin is purified by evaporating volatile contaminants, such as water.

15. The process according to any one of claims 1 to 14, wherein ash content (wt.%) in the purified lignin compared to the solid lignin composition is reduced by at least 80%, such as at least 90%, 95%, 97.5%, or 99.0%.

Solid Lignin → Dissolving lignin → Precipitating lignin → Separating lignin → Lignin

Deep eutectic solvent (into Dissolving lignin)

First aqueous solution (into Precipitating lignin)

Deep eutectic solvent (out of Separating lignin)

**Fig. 1**

**Purification**

Deep eutectic solvent

Solid Lignin → Dissolving lignin → Precipitating lignin → Separating lignin → Deep eutectic solvent

First aqueous solution

Lignin

Second aqueous solution → Washing lignin

Separating lignin

Lignin

**Fig. 2**

| | Europäisches Patentamt<br>European Patent Office<br>Office européen des brevets | **EUROPEAN SEARCH REPORT** | **Application Number**<br>EP 24 21 2773 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LIU WEI ET AL: "Upgrading lignin macromolecular by green and recyclable ternary deep eutectic solvents", BIORESOURCE TECHNOLOGY, vol. 394, 1 February 2024 (2024-02-01), page 130230, XP093264981, AMSTERDAM, NL ISSN: 0960-8524, DOI: 10.1016/j.biortech.2023.130230 | 1-5, 9-12,15 | INV.<br>C07G1/00<br>C08L97/00<br>B01D11/02<br>D21C11/00 |
| Y | * Process for purifying a lignin composition by extracting lignin with a deep eutectic solvent, then precipitating lignin from the deep eutectic solvent phase with an antisolvent (water). The precipitated lignin was washed and lyophilized to obtain "regenerated lignin": see page 3, paragraph 2.3 *<br>* The lignin samples obtained from three types of DES pretreatment have high yield (>77 %) and a higher purity (>91 %) over the starting material lignin (DEL, double-enzymatic lignin): see paragraph 3.2.1 on page 4 and figure 2b on page 5 *<br>-----<br>-/-- | 10,11 | |
| | | | **TECHNICAL FIELDS SEARCHED (IPC)**<br><br>C07G<br>C09J<br>D21H<br>B01D<br>C08L<br>D21C |

The present search report has been drawn up for all claims

| Place of search | Date of completion of the search | Examiner |
|---|---|---|
| The Hague | 31 March 2025 | Lange, Tim |

Europäisches Patentamt

European Patent Office

Office européen des brevets

# EUROPEAN SEARCH REPORT

**Application Number**

EP 24 21 2773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | TIAN RUBO ET AL: "Two-step separation of lignin from poplar wood powder using malic acid/choline chloride deep eutectic solvents", NEW JOURNAL OF CHEMISTRY, 20080101ROYAL SOCIETY OF CHEMISTRY, GB, vol. 47, no. 42, 1 January 2023 (2023-01-01), pages 19608-19616, XP093265044, ISSN: 1144-0546, DOI: 10.1039/D3NJ02987E | 1-9, 12-15 | |
| Y | * Process of delignifying wood (solid lignin composition) through consecutive cycles of heating polar wood in deep eutectic solvents, extracting the lignin therefrom as a solution in the DES and recovering the lignin from the DES solution by precipitating the lignin therefrom by dilution with water as antisolvent (see paragraphs 2.3 - 2.5; paragraph 3.4, see figure 1) * ----- | 10,11 | |
| X | IPPOLITOV VADIM ET AL: "Cellulose Membranes in the Treatment of Spent Deep Eutectic Solvent Used in the Recovery of Lignin from Lignocellulosic Biomass", MEMBRANES, vol. 12, no. 1, 13 January 2022 (2022-01-13), page 86, XP093264882, CH ISSN: 2077-0375, DOI: 10.3390/membranes12010086 * process for dissolving lignin from biomass, separating the lignin-DES solvent mixture and precipitating the purified lignin therefrom with water as antisolvent (see page 2/12) * ----- | 1 | TECHNICAL FIELDS SEARCHED (IPC) |

-/--

The present search report has been drawn up for all claims

| Place of search | Date of completion of the search | Examiner |
|---|---|---|
| The Hague | 31 March 2025 | Lange, Tim |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

........................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

**Application Number**

EP 24 21 2773

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2021/087303 A1 (CANON VIRGINIA INC [US]) 6 May 2021 (2021-05-06) * Claim 1: a method for extracting lignin from a biosource using deep eutectic solvents, separate the deep eutectic solvent with dissolved lignin and precipitating the purified lignin from the separated deep eutectic solvent mixture: see claim 1 * ----- | 1 | |
| | | | **TECHNICAL FIELDS SEARCHED      (IPC)** |

The present search report has been drawn up for all claims

| Place of search | Date of completion of the search | Examiner |
|---|---|---|
| The Hague | 31 March 2025 | Lange, Tim |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................

& : member of the same patent family, corresponding
document

EPO FORM 1503 03.82 (P04C01)

page 3 of 3

## ANNEX TO THE EUROPEAN SEARCH REPORT
## ON EUROPEAN PATENT APPLICATION NO.

EP 24 21 2773

This annex lists the patent family members relating to the patent documents cited in the above-mentioned European search report.
The members are as contained in the European Patent Office EDP file on
The European Patent Office is in no way liable for these particulars which are merely given for the purpose of information.

31-03-2025

| Patent document cited in search report | Publication date | Patent family member(s) | Publication date |
|---|---|---|---|
| WO 2021087303 A1 | 06-05-2021 | EP 4051060 A1 | 07-09-2022 |
| | | US 2024158637 A1 | 16-05-2024 |
| | | WO 2021087303 A1 | 06-05-2021 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2006031175 A
- US 8771464 B
- WO 2018004447 A1
- US 4946946 A

**Non-patent literature cited in the description**

- **GELLERSTEDT, G.** ; **TOMANI, P.** ; **AXEGÅRD, P.** ; **BACKLUND, B.** Lignin Recovery and Lignin-based Products. *Integrated Forest Biorefineries-Challenges and Opportunities*, 2013, 180-210
- **TOMANI, P.** The LignoBoost Process. *Cellulose Chem. Technol.*, 2010, vol. 44 (1-3), 53-58
- **SUOTA, M. J.** ; **DA SILVA, T. A.** ; **ZAWADZKI, S. F.** ; **SASSAKI, G. L.** ; **HANSEL, F. A.** ; **PALEOLOGOU, M.** ; **RAMOS, L. P.** Chemical and structural characterization of hardwood and softwood LignoForce™ lignins. *Industrial crops and products*, 2021, vol. 173, 114138
- **MASTROLITTI, S.** ; **BORSELLA, E.,** ; **GIULIANO, A.** ; **PETRONE, M. T.** ; **DE BARI, I.** ; **GOSSELINK, R.J.A.** ; **VAN ERVEN, G.** ; **ANNEVELINK, E.** ; **TRAINTAFYLLIDIS, K.S.** ; **STICHNOTHE, H.** Sustainable lignin valorization: Technical lignin, processes and market development. *IEA Bioenergy Task 42 & LignoCOST*, 2021, ISBN 979-12-80907-01-1
- Lignins - Determination of inorganics content in kraft lignin, soda lignin and hydrolysis lignin. *ISO 9795:2023 (en)*
- Solid biofuels - Determination of ash content. *ISO 18122:2022 (en)*
- Solid biofuels - Determination of the water soluble chloride, sodium and potassium. *ISO 16995:2015 (en)*
- Water quality - Determination of sodium and potassium - Part 1: Determination of sodium by atomic absorption spectrometry. *ISO 9964-1:1993 (en)*
- Water quality - Determination of sodium and potassium - Part 2: Determination of potassium by atomic absorption spectrometry. *ISO 9964-2:1993 (en)*